**Europäisches Patentamt**

**European Patent Office**

**Office européen des brevets**

(19)

(11) Veröffentlichungsnummer: **0 206 299**
**B1**

(12) # EUROPÄISCHE PATENTSCHRIFT

(45) Veröffentlichungstag der Patentschrift:
**04.01.89**

(51) Int. Cl.⁴: **B60K 11/08, F01P 11/10**

(21) Anmeldenummer: **86108509.0**

(22) Anmeldetag: **21.06.86**

(54) **Jalousie für einen Kühler einer Brennkraftmaschine.**

(30) Priorität: **25.06.85 DE 3522592**

(43) Veröffentlichungstag der Anmeldung:
**30.12.86 Patentblatt 86/52**

(45) Bekanntmachung des Hinweises auf die Patenterteilung:
**04.01.89 Patentblatt 89/1**

(84) Benannte Vertragsstaaten:
**DE FR GB IT SE**

(56) Entgegenhaltungen:
**DE-A- 1 679 603**
**DE-A- 3 145 414**
**DE-C- 815 866**
**US-A- 2 280 642**
**US-A- 3 946 788**
**US-A- 3 946 789**

(73) Patentinhaber: **Süddeutsche Kühlerfabrik Julius Fr. Behr GmbH & Co. KG, Mauserstrasse 3,
D-7000 Stuttgart 30(DE)**

(72) Erfinder: **Hummel, Karl-Ernst, Ing. (grad.), Berliner Strasse 16, D-7120 Bietigheim-Bissingen(DE)**
Erfinder: **Winterer, Wilfried, Manosquer Strasse 24, D-7022 Leinfelden(DE)**
Erfinder: **Bayer, Jürgen, Ing. (grad.), Albstrasse 23, D-7300 Esslingen 1(DE)**

(74) Vertreter: **Dauster, Hanjörg, Dipl.-Ing. et al, WILHELM & DAUSTER Patentanwälte Hospitalstrasse 8,
D-7000 Stuttgart 1(DE)**

**Beschreibung**

Die Erfindung betrifft eine Jalousie für einen Kühler einer Brennkraftmaschine, insbesondere eines Personenkraftwagens entsprechend dem Oberbegriff des Patentanspruchs 1.

Bei den meisten der bekannten Jalousien sind die Leisten in der Regel um eine mittige Achse verschwenkbar. Sie eignen sich wenig für eine Regelung, bei welcher der $c_W$-Wert eines Kraftfahrzeuges bei hohen Geschwindigkeiten verbessert werden soll, während gleichzeitig eine ausreichende Kühlmittelkühlung gewährleistet ist. Diese Jalousien werden in der Regel vollständig geöffnet oder vollständig geschlossen, da sie in den Zwischenstellungen keine guten Regelungseigenschaften aufweisen.

Um den $c_W$-Wert zu verbessern, werden deshalb andere Bauarten von Jalousien eingesetzt. Es ist beispielsweise bekannt, Rolljalousien aus Tuch o.dgl. vorzusehen, die quer zur Kühlerstirnfläche bewegbar sind. Diese Rolljalousien haben den prinzipiellen Nachteil, daß in den Zwischenstellungen nur eine ungleichmäßige Anströmung der Kühlerstirnfläche erfolgt. Darüber hinaus wird bei hohen Fahrgeschwindigkeiten infolge des Staudrucks das Tuch der Rolljalousie gegen die Kühlerstirnfläche angedrückt, so daß es dann schlecht verstellt werden kann.

Bei einer weiteren Bauart werden sogenannte Verschiebegitter vorgesehen, d.h. gegeneinander verschiebbare Gitter, die mit Öffnungen versehen sind. Diese Bauart hat die grundsätzliche Schwierigkeit, daß auch in völlig geöffnetem Zustand noch etwa 40% der Kühlerstirnfläche abgedeckt sind, so daß der mögliche Luftdurchsatz verringert und die Kühlung beeinträchtigt ist.

Es ist auch eine recht alte Konstruktion bekannt (US-A 2 170 524), bei der eine Art Jalousie aus zwei seitlichen, vertikal angeordneten stationären Leisten und zwei dazwischen angeordneten Klappenelementen gebildet ist. Die Klappenelemente, die sich ebenfalls in vertikaler Richtung erstrecken, enthalten jeweils zwei Leisten aus Metall, die an einem Längsrand über ein Scharnier miteinander verbunden sind. Die freien Ränder der etwa in der Fahrzeugmitte liegenden Leisten der beiden Klappenelemente sind um ein eine vertikale Achse aufweisendes Gelenk verschwenkbar gelagert. Die freien Ränder der beiden äußeren Leisten der Klappenelemente sind in Führungen im wesentlichen parallel zur Kühlerstirnfläche geführt. Ferner ist eine Antriebseinrichtung vorgesehen, durch die die Ränder der Klappenelemente aufeinander zu und voneinander weg bewegbar sind.

Der Erfindung liegt die Aufgabe zugrunde, eine Jalousie der eingangs genannten Art so auszubilden, daß einerseits in einfacher Weise teilweise geöffnete Zwischenstellungen angefahren werden können, während andererseits auch in der völlig geöffneten Stellung nur eine möglichst geringe Abdeckung der Kühlerstirnfläche gegeben ist.

Diese Aufgabe wird durch die Merkmale des Patentanspruches 1 gelöst.

Durch die erfindungsgemäße Ausbildung wird eine Jalousie geschaffen, die als eine Klappenjalousie bezeichnet wird. Die Vielzahl der einzelnen Klappenelemente, die jeweils aus zwei über ein Scharniergelenk miteinander verbundenen Leisten aus Kunststoff bestehen, werden je nach den vorliegenden Bedingungen auseinander- oder zusammengeklappt. In der auseinandergeklappten, flach liegenden Stellung, decken sie die Kühlerstirnfläche ab. In der zusammengefalteten Stellung geben sie die Kühlerstirnfläche weitgehend frei, wobei eine Abdeckung von nur noch etwa 10% der Kühlerstirnfläche verbleibt. In den Zwischenstellungen werden Bereiche der Kühlerstirnfläche sicher abgedeckt, während dennoch eine gleichmäßige Verteilung der anströmenden Luft auf die gesamte Kühlerstirnfläche gewährleistet wird. Dadurch ergeben sich vorteilhafte Bedingungen für die Zwischenstellungen, in welchen die Kühlerstirnfläche nur teilweise von der Jalousie freigegeben ist. Der Herstellungsaufwand und der Montageaufwand wird dadurch verringert, daß jeweils zwei Leisten einteilig ausgebildet und durch ein Filmscharnier miteinander verbunden sind, sowie dadurch, daß an den Leisten Zapfen für Führungen angeformt sind. Da die freien Längsränder der Leisten benachbarter Klappenelemente in der Schließstellung dichtend aneinander liegen, ist es möglich, die Kühlerstirnfläche vollständig von einem Kühlluftstrom abzutrennen.

In weiterer Ausgestaltung der Erfindung wird vorgesehen, daß vor der Kühlerstirnfläche zwischen den seitlichen Führungen wenigstens eine Führungsschiene für die nicht miteinander verbundenen Längsränder der Leisten angeordnet ist. Diese Führungsschiene dient zur Abstützung der Leisten zwischen den seitlichen Führungen, was insbesondere bei großen Kühlern und/oder zu erwartenden sehr hohen Staudrücken zweckmäßig ist, da dadurch eine Durchbiegung der Leisten verhindert werden kann.

In weiterer Ausgestaltung der Erfindung wird vorgesehen, daß die Klappenelemente im Bereich der gelenkig miteinander verbundenen Längsränder der Leisten in zu der Kühlerstirnfläche lotrecht gerichteten Führungen geführt sind. Dadurch wird eine besonders steife Konstruktion erhalten.

Weitere Merkmale und Vorteile der Erfindung ergeben sich aus den in den Zeichnungen dargestellten Ausführungsformen und den Unteransprüchen.

Fig. 1 zeigt eine erfindungsgemäße Jalousie für den Kühler einer Brennkraftmaschine eines Kraftfahrzeuges, wobei die Jalousie die Kühlerstirnfläche vollständig abdeckt,

Fig. 2 zeigt eine Teilansicht auf die Jalousie der Fig. 1 in größerem Maßstab,

Fig. 3 einen Schnitt entlang der Linie III-III durch die Teilansicht der Fig. 2,

Fig. 4 eine Teilansicht ähnlich Fig. 2 der Jalousie in geöffnetem Zustand,

Fig. 5 einen Schnitt entlang der Linie V-V der Fig. 4,

Fig. 6 eine teilweise geschnittene Ansicht einer weiteren Ausführungsform einer Jalousie in geöffnetem Zustand,

Fig. 7 einen Schnitt entlang der Linie VII-VII der Fig. 6,

Fig. 8 eine teilweise geschnittene Ansicht auf eine weitere Ausführungsform einer erfindungsgemäßen Jalousie in geöffnetem Zustand,

Fig. 9 einen Schnitt entlang der Linie IX-IX der Fig. 8,

Fig. 10 eine weitere Teilansicht einer weiteren Ausführungsform einer geöffneten Jalousie,

Fig. 11 einen Schnitt entlang der Linie XI-XI der Fig. 10 und

Fig. 12 bis 15 vergrößerte Schnitte durch Ausbildungen der Längsränder von in geschlossenem Zustand der Jalousie aneinander anstoßenden Leisten benachbarter Klappenelemente.

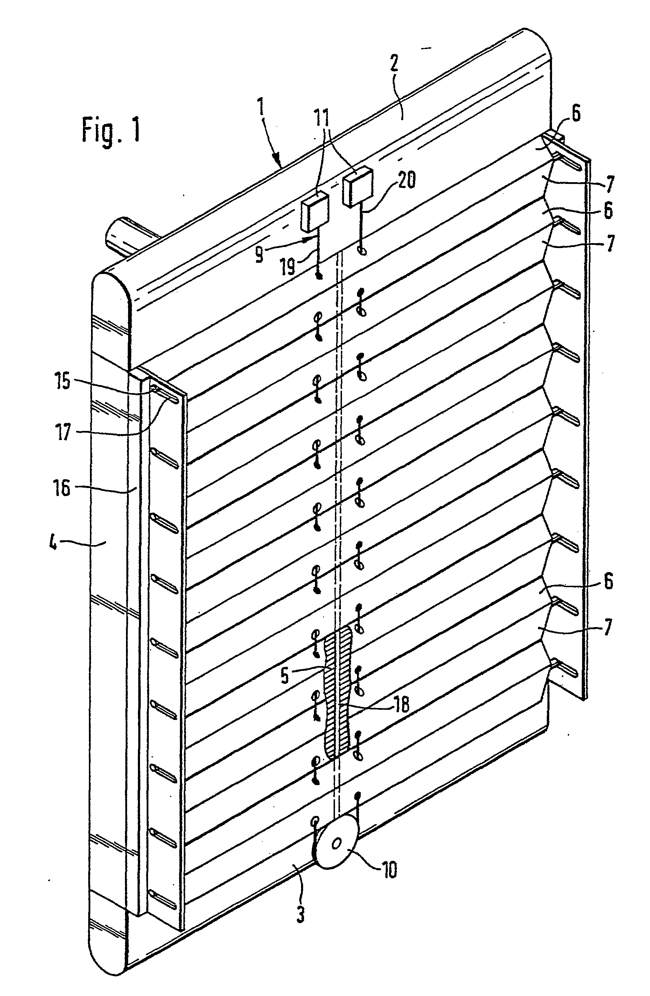

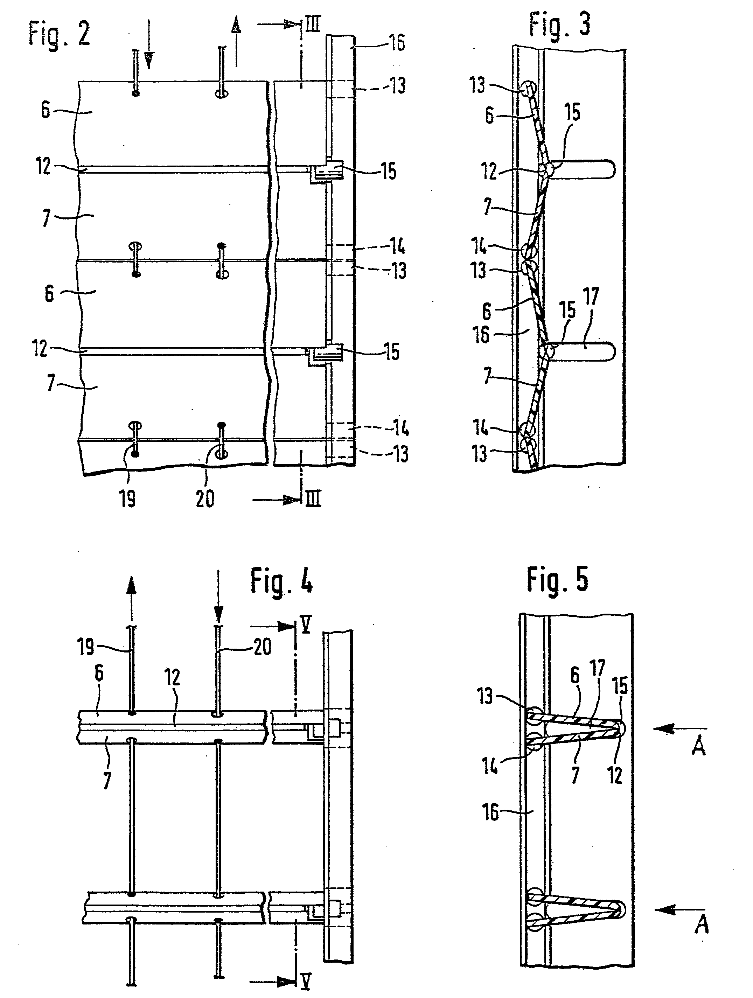

Der in Fig. 1 schematisch dargestellte Kühler 1 ist zum Kühlen einer Brennkraftmaschine eines Personenkraftwagens bestimmt. Er besitzt einen oberen Wasserkasten 2 und einen unteren Wasserkasten 3, zwischen denen ein Bündel 4 aus parallelen Rundrohren oder Flachrohren angeordnet ist, die mit Rippen versehen sind. Vor der in Fig. 1 teilweise sichtbaren Kühlerstirnfläche 5 ist eine Jalousie angeordnet. Diese Jalousie besteht aus mehreren Klappenelementen, die jeweils aus zwei Leisten 6 und 7 gebildet sind. Die Leisten 6 und 7, die aus Kunststoff hergestellt sind, sind an einem Längsrand über ein Filmscharnier 12 (Fig. 3) miteinander verbunden. An den Stirnenden der Leisten 6 und 7 sind Zapfen 13, 14 und 15 (Fig. 3) vorgesehen, die den freien Längsrändern der Leisten 6 und 7 und den über das Filmscharnier 12 miteinander verbundenen Längsrändern der Leisten 6 und 7 zugeordnet sind. Die den freien Längsrändern der Leisten 6 und 7 zugeordneten Zapfen 13 und 14 sind in einer Führungsschiene 16 geführt, die sich parallel zu der Kühlerstirnfläche 5 erstreckt. Die Zapfen 15 sind in lotrecht zu der Kühlerstirnfläche 5 verlaufenden Schlitzführungen 17 geführt.

Wie insbesondere aus Fig. 2 bis 5 zu ersehen ist, können die Leisten 6 und 7 der Klappenelemente der Jalousie auseinandergeklappt werden (Fig. 1 bis 3) oder zusammengeklappt werden (Fig. 4 und 5), wobei sie jeweils entsprechend ihrer Stellung die Kühlerstirnfläche abdecken oder freigeben. In der auseinandergeklappten Stellung, in welcher die Ränder der Leisten 6 und 7 der benachbarten Klappenelemente aneinander anliegen, wird die Kühlerstirnfläche 5 vollständig abgedeckt. In der zusammengeklappten Stellung (Fig. 4 und 5) ergibt sich die größtmögliche Öffnung, in welcher die Kühlerstirnfläche 5 nur noch etwa zu 10% abgedeckt ist. Die Leisten 6 und 7 der Klappenelemente können jede Zwischenstellung zwischen diesen beiden Extremstellungen einnehmen, wodurch eine entsprechende teilweise Abdeckung der Kühlerstirnfläche erhalten wird. Die an die Leisten 6 angespritzten Zapfen 15, die den durch das Filmscharnier 12 verbundenen Längsrändern der Leisten 6 und 7 zugeordnet sind, legen die Position der Klappenelemente fest.

Das Verstellen der Klappenelemente der Jalousie erfolgt über einen Seiltrieb 9. Der Seiltrieb 9 besitzt im Bereich des oberen Wasserkastens 2 ein oder mehrere Antriebselemente 11 und im Bereich des unteren Wasserkastens 3 eine Umlenkrolle 10. Die nur schematisch dargestellten Antriebselemente sind bei einer ersten Ausführungsform als ein Elektromotor ausgebildet, der mit zwei Seilscheiben versehen ist, an denen die Stränge 19 und 20 des Seiltriebs 9 festgelegt sind. Die beiden Scheiben können gegensinnig drehen oder gegensinnig mit dem Seil bewickelt sein. Selbstverständlich ist es auch möglich, einen endlosen Seiltrieb mit nur einer Scheibe vorzusehen, um die das Seil gegebenenfalls mehrfach geschlungen ist. Bei einer anderen Ausführungsform wird ein Antrieb mit einem thermostatischen Arbeitselement vorgesehen, das an einen der Seilstränge 19 oder 20 angeschlossen ist, während der andere Seilstrang mit einem Federelement gespannt gehalten wird. An dem Seilstrang 19 (Fig. 2 und 4) sind jeweils die Leisten 6 der Klappenelemente fest befestigt. Der Seilstrang 19 wird durch die Leisten 7 der Klappenelemente mit Spiel hindurchgeführt. Der mittels der Umlenkrolle 10 umgelenkte Seilstrang 20 ist dagegen an den Leisten 7 der Klappenelemente befestigt und mit Spiel durch die Leisten 6 hindurchgeführt. Je nach Richtung des Zuges werden somit die Leisten 6 und 7 der einzelnen Klappenelemente auseinander- oder zusammengeklappt.

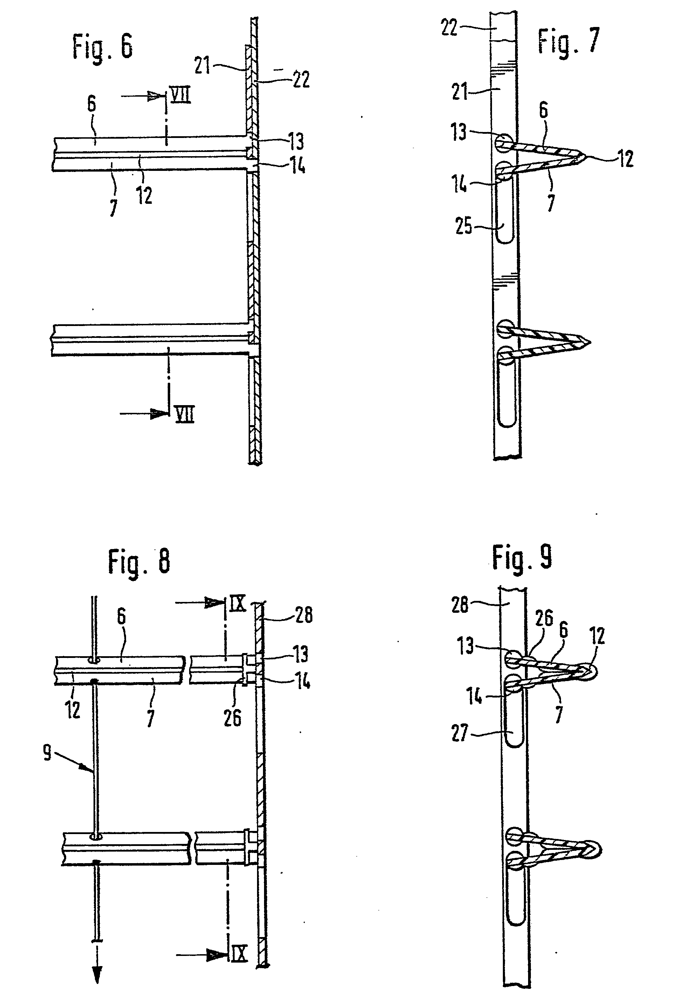

Die in Fig. 6 und 7 nur teilweise dargestellte Jalousie besteht ebenfalls aus einer Vielzahl von Klappenelementen, die jeweils aus Leisten 6 und 7 gebildet sind, die an ihren freien Längsrändern mit seitlich abragenden Zapfen 13 und 14 versehen sind. Die Zapfen 13 und 14 sind in zwei seitlich an einem nicht dargestellten Kühler angeordneten Führungsleisten 21 und 22 befestigt, die parallel nebeneinander liegen und die parallel zur Kühlerstirnfläche relativ zueinander bewegbar sind. Der Zapfen 13 der Leiste 6 ist in der inneren Führungsschiene 21 und der Zapfen 14 der Leiste 7 in der äußeren Führungsschiene 22 festgelegt. Die innere Führungsschiene 21 ist noch mit einer Aussparung 25 für den Zapfen 14 versehen, in der sich dieser frei bewegen kann. Durch ein gegenseitiges Verschieben der Führungsschienen 21 und 22 parallel zur Kühlerstirnfläche, werden die Zapfen 13 und 14 entsprechend mitgenommen und auseinanderbewegt oder aufeinander zugestellt, wobei die Leisten 6 und 7 der Klappenelemente auseinander- oder zusammengeklappt werden. Bei dieser Ausführungsform erübrigt sich eine Führung für die einzelnen Klappenelemente im Bereich der durch das Filmscharnier 12 verbundenen Längsränder der Leisten 6 und 7. Die Führungsschienen 21 und 22 sind bei einer ersten Ausführungsform beide an einen hin- und hergehenden Antrieb angeschlossen, die sich gegensinnig bewegen. Bei einer anderen Ausführungsform ist vorgesehen, daß nur eine der Führungsschienen 21 oder 22 an einen hin- und herbewegbaren Antrieb angeschlossen ist.

Bei der Ausführungsform nach Fig. 8 und 9 sind Klappenelemente vorgesehen, die aus zwei Leisten 6 und 7 gebildet sind, die im Bereich der freien Längsränder mit seitlich abstehenden Zapfen 13 und 14 versehen sind. Der Zapfen 13 der Leiste 6 ist in einer Aussparung einer Schiene 28 stationär, aber drehbar angeordnet. Der Zapfen 14 der Leiste 7 ist in einer Aussparung 27 der Führungsschiene 28 verschiebbar, die sich parallel zu der Kühlerstirnfläche eines nicht dargestellten Kühlers erstreckt. Bei dieser Ausführungsform werden die beiden Leisten 6 und 7 der Klappenelemente mit einer Bügelfeder 26 belastet, die die Klappenelemente in die zusammengeklappte Stellung der Leisten 6 und 7 drückt. Das Verstellen der Klappenelemente erfolgt durch einen Seiltrieb 9, der aus einem Strang besteht, welcher an den den verschiebbaren Zapfen 14 aufweisenden Leisten 7 angreift und lose durch die Leisten 6 hindurchgeführt ist. Der Seilzug 9 dieser Ausführungsform bewirkt nur ein Verstellen in einer Richtung, d.h. das Auseinanderklappen der Leisten 6 und 7 zum Abdecken der Kühlerstirnfläche. Bei einer abgewandelten Ausführungsform wird anstelle eines Seilzuges 9 zum Verstellen der Leisten 6 und 7 ein Gestänge vorgesehen.

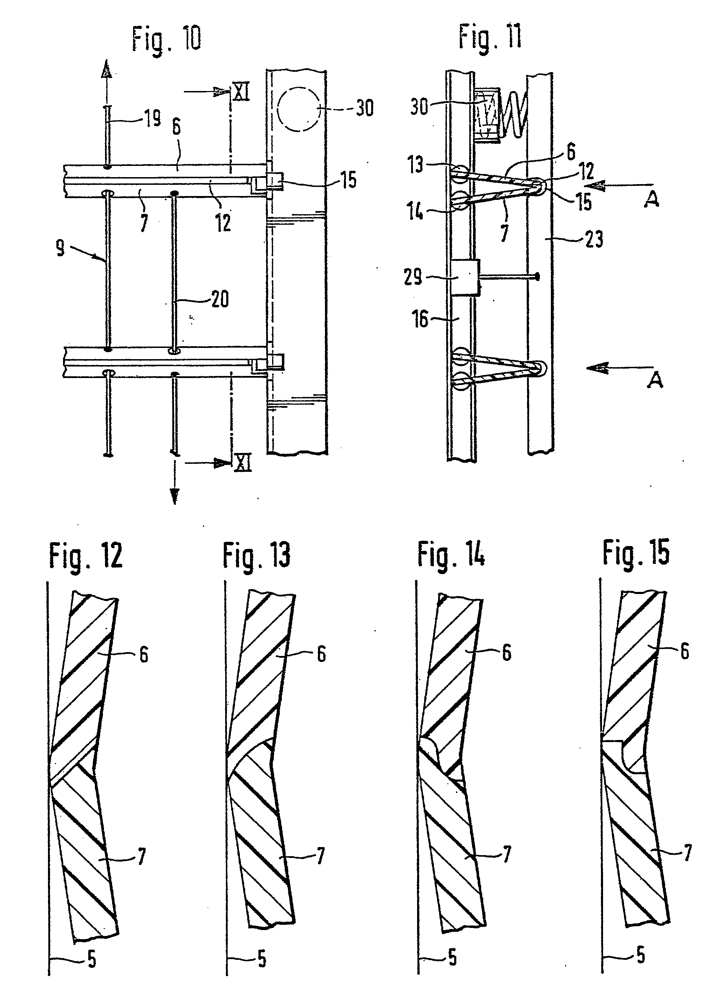

Auch bei der Ausführungsform nach Fig. 10 und 11 sind Klappenelemente aus Leisten 6 und 7 vorgesehen, die an einem Längsrand über ein Filmscharnier 12 miteinander verbunden sind. Die Leisten 6 und 7 sind im Bereich der freien Längsränder und im Bereich der verbundene Längsränder jeweils mit einem Zapfen 13, 14 und 15 versehen, die seitlich in Verlängerung der Längsrichtung der Leisten 6 und 7 von diesen abragen. Die Zapfen 13 und 14 sind in einer Führungsschiene 16 verschiebbar geführt. Der Zapfen 15, der dem Bereich des Filmscharniers 12 zugeordnet ist, ist in einer Schiene 23 festgelegt, die lotrecht zu der nicht dargestellten Kühlerstirnfläche und damit auch lotrecht zur Führungsrichtung der Führungsschiene 16 beweglich ist. Zwischen der Führungsschiene 16 und der Schiene 23 sind mehrere Druckfederelemente 30 angeordnet, von denen in Fig. 10 und 11 nur eines dargestellt ist. Diese Druckfederelemente 30 dienen zum Auseinanderbewegen der Führungsschiene 16 und der Schiene 23. Mit diesem Auseinanderbewegen werden die in der Führungsschiene 16 mit ihren Zapfen 13 und 14 geführten Leisten 6 und 7 der Klappenelemente zusammengeklappt. Durch ein Heranbewegen der Schiene 23 gegen die Führungsschiene 16, was bei der Ausführungsform nach Fig. 11 durch einen Antrieb 29 bewirkt wird, werden die beiden Leisten 6 und 7 der Klappenelemente auseinandergeklappt. Das Auseinanderklappen der Leisten 6 und 7 der Klappenelemente wird bei der Ausführungsform nach Fig. 10 durch einen Seiltrieb bewirkt, bei welchem ein Strang 19 mit den Leisten 6 und der andere, in Gegenrichtung umgelenkte Strang 20 an die Leisten 7 angelenkt ist. Durch diesen Seiltrieb 9, der in Richtung der in Fig. 10 dargestellten Pfeile eine Zugbelastung aufbringt, werden die Leisten 6 und 7 der Klappenelemente auseinandergespreizt, wodurch die Schiene 23 an die Schiene 16 gegen die Wirkung der Druckfederelemente 30 herangezogen wird.

Wie aus allen Ausführungsbeispielen ersichtlich ist, weisen die Leisten 6 und 7 in der geschlossenen Stellung eine leichte Neigung zu der Ebene der Kühlerstirnfläche 5 auf, so daß sie ohne Schwierigkeiten mittels einer nur parallel zur Kühlerstirnfläche gerichteten Betätigungskraft so bewegt werden können, daß sie zusammengefaltet werden.

In der Schließstellung der Jalousie liegen die Ränder der Leisten 6 und 7 der benachbarten Klappenelemente dichtend aneinander an. Bei der Ausführungsform nach Fig. 12 ist eine einfache glattflächige Anlage vorgesehen. Bei den Ausführungsformen nach Fig. 13 bis 15 ist dagegen vorgesehen, daß die Ränder der Leisten 6 und 7 der benachbarten Klappenelemente ineinandergreifen und eine Art formschlüssige Verbindung in Querrichtung herstellen.

Bei allen Ausführungsformen ist vorgesehen, daß die durch ein Gelenk, insbesondere ein Filmscharnier 12, verbundenen Längsränder der Leisten 6 und 7 entgegen der Fahrtrichtung und damit entgegen der anströmenden Luft (Pfeilrichtung A in Fig. 5 und 11) gerichtet sind. Der Staudruck unterstützt somit das Auseinanderklappen der Leisten 6 und 7 und das sichere Einnehmen der geschlossenen Stellung. Bei einer umgekehrten Anordnung, d.h. bei in Fahrtrichtung vorne liegenden geführten Längsrändern, wird das Öffnen unterstützt.

## Patentansprüche

1. Jalousie für einen Kühler einer Brennkraftmaschine, insbesondere eines Personenkraftwagens, die sich quer zur Kühlerstirnfläche erstreckende Leisten enthält, die zwischen einer im wesentlichen zur Kühlerstirnfläche parallelen Position und einer im wesentlichen zur Kühlerstirnfläche lotrechten Position mittels einer Antriebseinrichtung verstellbar sind und die jeweils zu zweien an einem Längsrand gelenkig miteinander verbunden und zu einem Klappenelement zusammengefaßt sind, wobei die freien Längsränder der Leisten jedes Klappenelementes parallel zur Kühlerstirnfläche derart geführt sind, daß sie mittels der Antriebseinrichtung aufeinander zu und voneinander hinweg bewegbar sind, dadurch gekennzeichnet, daß eine Vielzahl von in Schließstellung die Kühlerstirnfläche abdeckenden Klappenelementen vorgesehen ist, von welchen jeweils zwei Leisten einteilig aus Kunststoff hergestellt und an einem der Längsränder über ein Filmscharnier (12) miteinander verbunden sind, daß die Leisten (6, 7) an ihren Stirnenden mit angeformten Führungen (16, 17, 21, 22) zugeordnete Zapfen (13, 14, 15) versehen sind und daß die freien Längsränder der Leisten (6, 7) benachbarter Klappenelemente in der Schließstellung dichtend aneinander anliegen.

2. Jalousie nach Anspruch 1, dadurch gekennzeichnet, daß vor der Kühlerstirnfläche (5) zwischen den seitlichen Führungen (16) wenigstens eine Führungsschiene (18) für die nicht miteinander verbundenen Längsränder der Leisten (6, 7) angeordnet ist.

3. Jalousie nach Anspruch 1 oder 2, dadurch gekennzeichnet, daß Klappenelemente im Bereich der gelenkig miteinander verbundenen Längsränder der Leisten (6, 7) in zu der Kühlerstirnfläche (5) lotrecht gerichteten Führungen (17) geführt sind.

4. Jalousie nach einem der Ansprüche 1 bis 3, dadurch gekennzeichnet, daß ein Seilantrieb (9) vorgesehen ist, dessen in eine Richtung laufender Strang (19) mit den jeweils in dieser Richtung vorderen Leisten (6) der Klappenelemente verbunden ist und dessen anderer, in Gegenrichtung umgelenkter Strang (20) jeweils mit den in Gegenrichtung vorderen Leisten (6) des Klappenelementes verbunden ist.

5. Jalousie nach einem der Ansprüche 1 bis 4, dadurch gekennzeichnet, daß der freie Längsrand einer Leiste (6) eines Klappenelementes ortsfest gelagert und der freie Längsrand der anderen Leiste (7) quer zur Kühlerstirnfläche (5) bewegbar geführt ist.

6. Jalousie nach einem der Ansprüche 1 bis 5, dadurch gekennzeichnet, daß die den freien Längsrändern der Leisten (6, 7) der Klappenelemente zugeordneten Führungen (21, 22) quer zur Kühlerstirnfläche (5) relativ zueinander bewegbar sind.

7. Jalousie nach einem der Ansprüche 1 bis 6, dadurch gekennzeichnet, daß die Klappenelemente mit den miteinander verbundenen Längsrändern in einer Führung (23) gehalten sind, die in lotrechter Richtung zur Kühlerstirnfläche (5) bewegbar ist.

**Claims**

1. A blind for a radiator of an internal combustion engine, particularly of a private car, which contains extending transversely of the front face of the radiator, strips adapted to be moved by a drive means between a position substantially parallel with the front face of the radiator and a position substantially at right angles to the front face of the radiator, the strips being connected in pairs in articulation fashion along one longitudinal edge and being combined into one hinged element, the free longitudinal edges of the strips of each hinged element being so guided parallel with the front face of the radiator that they can be moved towards and away from each other by the drive means, characterised in that a plurality of hinged elements are provided which, when in the closed position, mask the front face of the radiator, and of which every two strips are produced in one piece from synthetic plastics material and are connected to each other by a film hinge (12) on one of the longitudinal edges and in that the strips (6, 7) are provided at their head ends with studs (13, 14, 15) associated with integrally moulded guides (16, 17, 21, 22) and in that the free longitudinal edges of the strips (6, 7) of adjacent hinged elements bear on one another in sealing tight manner when in the closed position.

2. A blind according to claim 1, characterised in that in front of the front face (5) of the radiator, between the lateral guides (16), there is at least one guide rail (18) for those longitudinal edges of the strips (6, 7) which are not connected to one another.

3. A blind according to claim 1 or 2, characterised in that in the region of the articulatingly connected longitudinal edges of the strips (6, 7), hinged elements are guided in a guide (17) directed at right angles to the front face (5) of the radiator.

4. A blind according to one of claims 1 to 3, characterised in that a cable drive (9) is provided of which the strand (19) running in one direction is connected to whichever in this direction are the front strips (6) of the hinged elements while the other strand (20), extending in the opposite direction, is connected with in each case those strips (6) of the hinged elements which are in front in the opposite direction.

5. A blind according to one of claims 1 to 4, characterised in that the free longitudinal edge of a strip (6) of a hinged element is rigidly mounted while the free longitudinal edge of the other strip (7) is adapted for movement transversely in respect of the front face (5) of the radiator.

6. A blind according to one of claims 1 to 5, characterised in that the guides (21, 22) associated with the free longitudinal edges of the strips (6, 7) of the hinged elements are adapted for movement relative to one another and transversely to the front face (5) of the radiator.

7. A blind according to one of claims 1 to 6, characterised in that the hinged elements are supported by their connected longitudinal edges in a guide (23) adapted for movement in a direction at right angles to the front face (5) of the radiator.

**Revendications**

1. Jalousie pour un radiateur d'un moteur à combustion interne, notamment d'une voiture de tourisme, comportant des lattes, qui s'étendent transversalement par rapport à la surface frontale du radiateur, peuvent être déplacées au moyen d'un dispositif d'entraînement entre une position sensiblement parallèle à la surface frontale du radiateur et une position sensiblement perpendiculaire à cette surface, sont reliées respectivement deux-à-deux de façon articulée au niveau d'un bord longitudinal et sont réunies pour constituer un élément formant volet, les bords longitudinaux libres des lattes de chaque élément formant volet étant guidés parallèlement à la surface frontale du radiateur de manière à être rapprochées et écartées les uns des autres au moyen du dispositif d'entraînement, caractérisée en ce qu'il est prévu une multiplicité d'éléments formant volets qui, dans la position de fermeture, recouvrent la surface frontale du radiateur, que les deux lattes de chacun de ces éléments formant volets sont réalisées d'un seul tenant en une matière plastique et sont reliés entre eux, au niveau des bord longitudinaux, par l'intermédiaire d'une charnière en forme de pellicule (12), que les lattes (6, 7) comportent, au niveau de leurs extrémités frontales, des tétons (13, 14, 15) associés à des guides (16, 17, 21, 22) formés par façonnage et que les bords longitudinaux libres des lattes (6, 7) d'éléments formant volets voisins sont appliqués les uns contre les autres de façon étanche dans la position de fermeture.

2. Jalousie selon la revendication 1, caractérisée en ce qu'au moins un rail de guidage (18) pour les bords longitudinaux non reliés entre eux des lattes (6, 7) est disposé en avant de la surface frontale (5) du radiateur entre les guides latéraux (16).

3. Jalousie selon la revendication 1 ou 2, caractérisée en ce que des éléments formant volets sont guidés, dans la zone des bords longitudinaux reliés entre eux par articulation des lattes (6, 7), dans des guides (17) perpendiculaires à la surface frontale (5) du radiateur.

4. Jalousie selon l'une des revendications 1 à 3, caractérisée en ce qu'il est prévu un dispositif d'entraînement à câble (9), dont le brin (19) s'étendant dans une direction est relié aux lattes (6), situées respectivement en amont dans cette direction, des éléments formant volets, et dont l'autre brin (20), qui revient en sens inverse, est relié respectivement aux lattes (6), situées en amont dans le sens inverse, de l'élément formant volet.

5. Jalousie selon l'une des revendications 1 à 4, caractérisée en ce que le bord longitudinal libre d'une latte (6) d'un élément formant volet est supporté d'une manière fixe et que le bord longitudinal de l'autre latte (7) est guidé de manière à être déplaçable transversalement par rapport à la surface frontale (5) du radiateur.

6. Jalousie selon l'une des revendications 1 à 5, caractérisée en ce que les guides (21, 22) associés aux bords longitudinaux libres des lattes (6, 7) des éléments formant volets sont déplaçables les uns par rapport aux autres transversalement par rapport à la surface frontale (5) du radiateur.

7. Jalousie selon l'une des revendications 1 à 6, caractérisée en ce que les éléments formant volets sont maintenus, par les bords longitudinaux reliés entre eux, dans un guide (23) déplaçable dans une direction perpendiculaire à la surface frontale (5) du radiateur.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15